(19) Europäisches Patentamt / European Patent Office / Office européen des brevets

(11) **EP 2 843 514 A1**

(12) **EUROPEAN PATENT APPLICATION**
published in accordance with Art. 153(4) EPC

(43) Date of publication:
**04.03.2015 Bulletin 2015/10**

(51) Int Cl.:
**G06F 3/03** *(2006.01)* **G06F 3/041** *(2006.01)*
**G06F 3/044** *(2006.01)*

(21) Application number: **13780813.5**

(22) Date of filing: **17.04.2013**

(86) International application number:
**PCT/JP2013/061354**

(87) International publication number:
**WO 2013/161638 (31.10.2013 Gazette 2013/44)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **27.04.2012 JP 2012102263**
**27.04.2012 JP 2012102264**
**10.04.2013 JP 2013081766**

(71) Applicant: **Mitsubishi Pencil Co., Ltd.**
**Tokyo 140-8537 (JP)**

(72) Inventors:
• **MINE, Shigenobu**
**Yokohama-shi**
**Kanagawa 221-0014 (JP)**

• **MITSUI, Akihito**
**Yokohama-shi**
**Kanagawa 221-0014 (JP)**
• **SAKAGAMI, Masashi**
**Yokohama-shi**
**Kanagawa 221-0014 (JP)**
• **NAKAMURA, Hitoshi**
**Yokohama-shi**
**Kanagawa 221-0014 (JP)**
• **TAKIGAWA, Seiichi**
**Yokohama-shi**
**Kanagawa 221-0014 (JP)**

(74) Representative: **Vossius & Partner**
**Siebertstrasse 3**
**81675 München (DE)**

(54) **TOUCH PANEL FILM, TOUCH PANEL USING SAME AND STYLUS PEN USED WITH SAME**

(57) To detect a position on a screen with which even a thin nib is in contact, and improve operativity, visibility at the time of operation, and a feeling of use. A touch screen film 5 includes at least a transparent, conductive, thin film 7 which has a predetermined surface resistivity set to be within a range from $10^{5.0}$ to $10^{8.0}$ Ω/sq; when a pointing means 30 comes into contact with the film, a change in capacitance per unit area of 0.36 to 6.00 $pF/mm^2$ occurs in a dielectric material 4 between a predetermined area including the contact position and the sensor electrode.

[Fig. 5]

**Description**

Technical Field

The present invention relates to a touch screen film, and a touch screen using the film, and a stylus pen used together with the film, and relates to, for example, a film for a capacitive touch screen, and a touch screen using the film, and a stylus pen used together with the film, in which an on-screen position in contact with a pointing means, such as a finger, a stylus pen, etc., is obtained as coordinates information.

Background Art

In recent years, for personal digital assistants which have spread quickly, such as a smart phone, a tablet PC, etc., projection-type capacitive touch screens are often used which allow multi-touch operation.

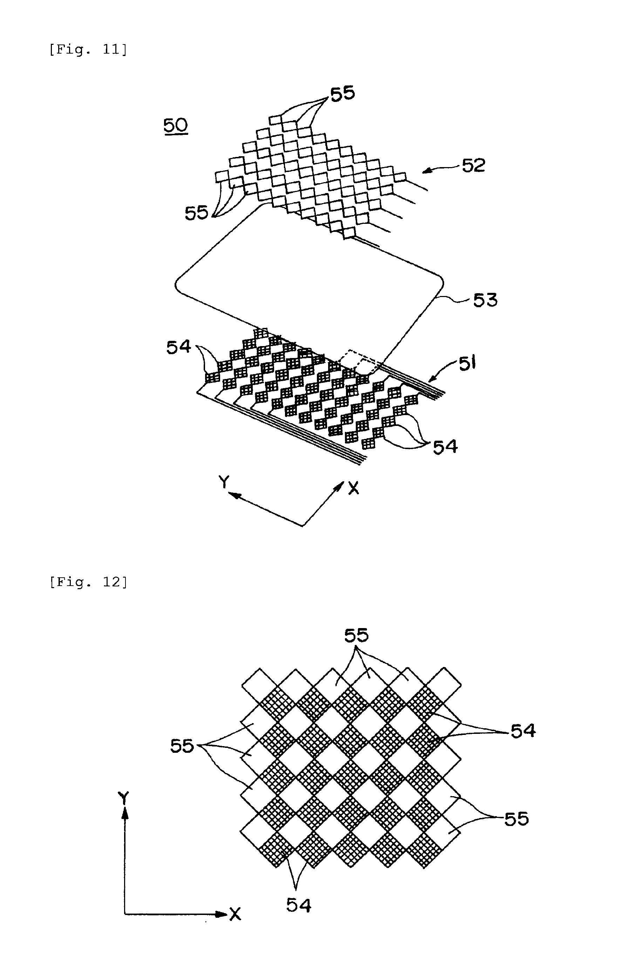

A structure of such a projection-type capacitive touch screen will be briefly described with reference to FIG. 11 (exploded view). In a capacitive touch screen 50 as shown in FIG. 11, for example, an indium tin oxide film (hereinafter referred to as ITO film) 51 which has a plurality of electrodes for performing coordinates detection in the Y direction is formed at the back of a transparent insulating film 53, and an ITO film 52 which has a plurality of electrodes for performing coordinates detection in the X direction is formed at the front side.

As for the above-mentioned ITO film 51, a plurality of square electrode pads 54 (sensor electrodes) which are connected in the X direction and electrically and mutually connected are arranged in a plurality of rows (in the Y direction). As for the above-mentioned ITO film 52, a plurality of square electrode pads 55 (sensor electrodes) which are connected in the Y direction and are electrically and mutually connected are arranged in a plurality of columns (in the X direction). Each of the electrode pads 54 and 55 has a sufficient area to produce a change in capacitance (around 1 pF) which can detect a position in contact with pointing means (finger, stylus pen, etc.). For example, it is formed to have a diagonal line length of around 5 mm.

When the insulating film 53 having formed thereon the above-mentioned ITO films 51 and 52 is viewed in plan, it has a two-dimensional grid-like structure where the respective electrode pads 54 and 55 are laterally arranged at predetermined intervals as shown in FIG. 12.

Among the electrode pads 54 connected in the X direction, the electrode pad 54 in the contact position changes in capacitance to exceed a predetermined value, when a fingertip (for example) comes into contact with the touch screen 50 through a cover glass (not shown). Thereby, a coordinates position in the Y direction is detected.

Further, among the electrode pads 55 connected in the Y direction, the electrode pad 55 in the contact position changes in capacitance to exceed a predetermined value. Thereby, a coordinates position in the X direction is detected.

Incidentally, as described above, if the above-mentioned capacitive touch screen 50 does not cause a position in contact with a finger or a stylus pen to generate a capacitive change of the predetermined value (approximately 1 pF) or more, it cannot detect the location. For this reason, conventionally, input operation to the capacitive touch screen is carried out with the conductive stylus pen which allows a larger contact area than the area of the electrode pads 54 and 55, or with a fingertip so as to generate change in capacitance required for position detection (if the contact area is small, the change in capacitance required for position detection is not generated). It should be noted that one of prior art with respect to a projection-type capacitive touch screen is disclosed in Patent Document 1, for example.

Prior Art Documents

Patent Documents

Patent Document 1: Japanese Patent Application Publication No. 2008-310551

SUMMARY OF THE INVENTION

Problems to Be Solved by the Invention

However, in the case where input operation is carried out through a capacitive touch screen by means of the above-mentioned conductive stylus pen, which requires a thick nib (for example, a diameter of 5 mm (contact area is around 19. 6 mm$^2$) or more) as described above, a problem arises in that operativity, visibility at the time of operation, and a feeling of use may be spoiled.

In order to solve the above-mentioned problem, a sensor electrode of the touch screen may be simply subdivided to reduce an amount of detectable change in capacitance in each sensor electrode. If this is the case, a smaller current change must be detected, thus leading to another problem in that incorrect detection may be more likely to arise.

Further, the subdivided sensor electrodes increase the number of electrodes, and considerably increase an amount of operations for finding a touch position. Therefore, in the case where a throughput of a control unit for calculation is insufficient, there is a problem in that the detection of the touch position cannot follow the touch operation, but delay arises in the display etc., thus reducing user-friendliness. Furthermore, in the case where the throughput of the control unit is increased so that the touch position detection can follow the touch operation, there is another problem of increasing power consumption and a high cost.

The present invention arises in view of the above-mentionedpoints, and aims to provide a touch screen film provided on a capacitive touch screen in which an on-screen position in contact with a pointing means is obtained as coordinates information and even an area which is in contact with the pointing means and is smaller than a conventional one allows a contact position to be detected, and a touch screen using the film, as well as a stylus pen used with the above-mentioned touch screen film, in which even a thin nib comes into contact with the touch screen, the contact position on the screen can be detected, and operativity, visibility at the time of operation, and a feeling of use can be improved.

Means for Solving the Problems

In order to solve the above-mentioned problems, the touch screen film in accordance with the present invention is a film for a capacitive touch screen, the film being interposed between the capacitive touch screen in which sensor electrodes are arranged in the shape of a grid, and a conductive pointingmeans, wherein at least a transparent, conductive, thin film is provided which has a predetermined surface resistivity set to be within a range from $10^{5.0}$ to $10^{8.0}$ $\Omega$/sq, and on contact with the above-mentioned pointing means, a change in capacitance per unit area of 0.36 to 6.00 (pF/mm$^2$) occurs in a dielectric material between a predetermined area including the contact position and the above-mentioned sensor electrode.

Further, it is desirable that it includes a transparent protective film provided on the above-mentioned transparent, conductive, thin film.

As such, if the pointing means comes into contact with the film which has at least the transparent, conductive, thin film having a predetermined surface resistivity set to be within the range from $10^{5.0}$ to $10^{8.0}$ $\Omega$/sq, then a change in capacitance per unit area of 0.36 to 6.00 pF/mm$^2$ occurs in the dielectric material between the predetermined area including the contact position and the above-mentioned sensor electrode. Therefore, even if the contact area of the pointing means is smaller than an area of the sensor electrode which constitutes the touch screen, it is possible to provide a contact state equivalent to that of an operator's finger.

That is to say, even if the contact area of the pointing means is small, the change in capacitance within a predetermined range can be produced between the pointing means in contact with the film surface and the sensor electrode, and a contact position of the pointing means can be detected.

Thus, for example, it is possible to operate the touch screen by a stylus pen having a thin nib, and operativity, visibility at the time of operation, and a feeling of use can be improved.

Further, since a conventional structure can be applied to the structure of the touch screen, it is possible to prevent the manufacturing cost from increasing.

Furthermore, the above-mentioned transparent, conductive, thin film may be constituted by a plurality of transparent small electrodes electrically and mutually insulated. In that case, when the pointing means comes into contact with the film surface, the change in capacitance required for the response of the touch screen can be generated between the above-mentioned small electrode and the sensor electrode in the contact position.

That is to say, even if the tip diameter (contact area) of the pointing means is small, the touch screen can be caused to provide a response in the area of the small electrode in the contact position, so that the touch screen can be operated by the pointing means having a thin nib.

Further, in order to solve the above-mentioned problems, the touch screen in accordance with the present invention is a touch screen using the above-mentioned touch screen film, including the above-mentioned touch screen film and the sensor electrodes which are provided for a lower layer than the above-mentioned touch screen film, and are arranged in the shape of a grid.

Further, in order to solve the above-mentioned problems, the stylus pen in accordance with the present invention is a stylus pen which is used for operating a capacitive touch screen where the sensor electrodes are arranged in the shape of a grid, and is used together with the above-mentioned touch screen film, wherein a nib formed of a conductive material and a human body are electrically connected.

In addition, it is desirable that the area where the above-mentioned nib is in contact with the top of the touch screen film is from 2.1 mm$^2$ to 10.8 mm$^2$.

According to such a structure, even if the contact area of the nib of the stylus pen which is the pointing means is smaller than the area (for example, around 12.5 mm$^2$) of the sensor electrode which constitutes the touch screen, it is possible to provide a contact state equivalent to that of the operator's finger.

That is to say, even if the contact area of the nib of the stylus pen is small, the change in capacitance within a predetermined range can be produced between the nib in contact with the film surface and the sensor electrode, and the contact position of the stylus pen can be detected.

Thus, it is possible to operate the touch screen by the stylus pen having the thin nib, and improve operativity, visibility at the time of operation, and a feeling of use.

Further, since the conventional structure may be applied to the structure of the touch screen, it is possible to prevent the manufacturing cost from increasing.

Effects of the Invention

According to the present invention, it is possible to provide the touch screen film which is provided on the capacitive touch screen where the on-screen position in contact with the pointing means is obtained as coordinates information; even if the contact area of the pointing means is smaller than the conventional one, the contact position can be detected. Also, it is possible to provide the touch screen using the film. Further, it is possible to provide the stylus pen used together with the above-mentioned touch screen film, wherein even if the nib is thin, the on-screen position in contact with the nib can be detected, and operativity, visibility at the time of operation, and a feeling of use can be improved.

BRIEF DESCRIPTION OF THE DRAWINGS

FIG. 1 is a sectional view of a touch screen device provided with a touch screen film in accordance with the present invention.

FIG. 2 is a sectional view showing a structure for explaining the effect that an actual contact area is apparently expanded, when bringing a conductive pointing means into contact with a high resistance film.

FIG. 3 shows an equivalent circuit of an integrator circuit produced on the high resistance film shown in FIG. 2.

FIG. 4 is a side view showing a nib of a stylus pen in accordance with the present invention.

FIG. 5 is a sectional view showing schematically a situation where the stylus pen of FIG. 4 is brought into contact with the touch screen film of FIG. 1.

FIG. 6 is a perspective diagram showing an arrangement for capacitance measurement used in Experiment 1 of Example.

FIG. 7 is a graph showing the results of Experiment 1 of Example.

FIG. 8 is a graph showing the results of Experiment 2 of Example, which are simulation results showing a relationship between surface resistivity and capacitance at a current frequency of 300 kHz.

FIG. 9 is a graph showing the results in which the capacitance in the graph of FIG. 8 is converted into the apparently expanded diameter of the pointing means.

FIG. 10 is a plan view showing schematically a situation where a transparent, conductive, thin film provided for a touch screen film in accordance with the present invention is divided into a plurality of small divisions that are insulated mutually.

FIG. 11 is an exploded view schematically showing a structure of a conventional touch screen.

FIG. 12 is a plan view schematically showing a sensor electrode of the touch screen of FIG. 11.

Mode for Carrying Out the Invention

Hereinafter, the preferred embodiments of the present invention will be described with reference to the drawings.

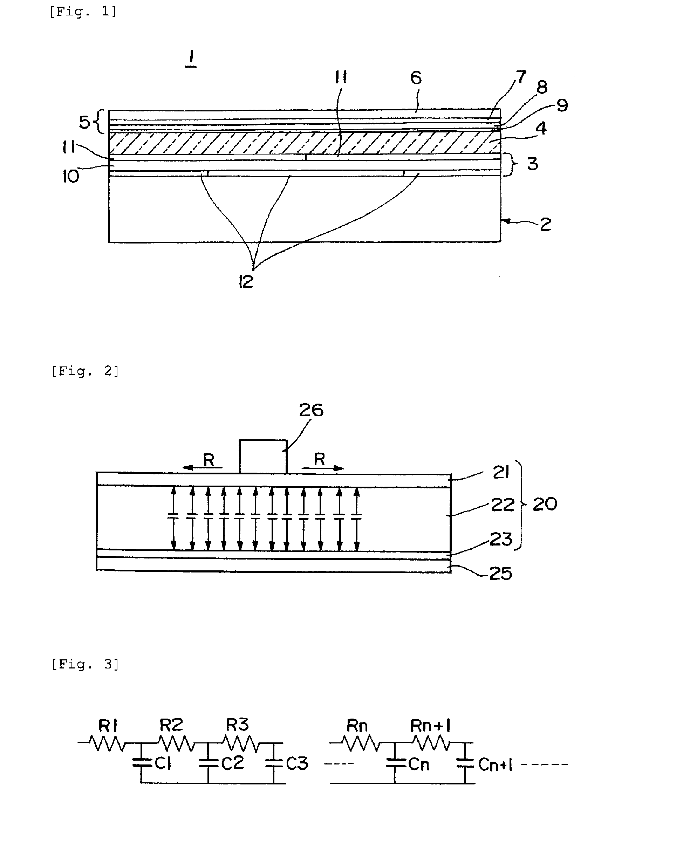

FIG. 1 is a sectional view of a touch screen device provided with a touch screen film in accordance with the present invention.

In a touch screen device 1 of FIG. 1, a touch screen 3 is formed on an LCD unit 2, which is a liquid crystal display, on which a high resistance film 5 as a touch screen film is formed through a cover glass 4 which is a dielectric material. It should be noted that at least an adhesion layer 9 is formed at the lowermost layer of the high resistance film 5 in order to fix the above-mentioned high resistance film 5 on the above-mentioned cover glass 4.

For example, similar to the conventional structure shown in FIG. 11, sensor electrodes of an ITO film are formed on front and back surfaces of a transparent insulating film 10 (equivalent to the insulating film 53 of FIG. 11) in the above-mentioned touch screen 3. In particular, a plurality of electrode pads 11 (equivalent to the electrode pads 55 of FIG. 11) are formed on the front side of the insulating film 10, and a plurality of electrode pads 12 (equivalent to the electrode pads 54 of FIG. 11) are formed on the back side. Similar to the conventional structure of FIGS. 11 and 12, each of the electrode pads 11 and 12 is formed in the shape of a square, to thereby constitute a two-dimensional grid-like sensor electrodes (similar to the structure of FIG. 12). Further, a diagonal size of each of the electrode pads 11 and 12 is arranged to be 5 mm (for example), and the change of a predetermined capacitance (for example, around 1 pF) allows the detection of the contact between the pointing means (finger, conductive stylus pen, etc.) and the electrode pads 11 and 12.

Further, the above-mentioned high resistance film 5 is a transparent stacked film, and has a PET film 8, a transparent, conductive, thin film 7 which is of high resistance and formed on the PET film 8, and a protective film 6 formed on the transparent, conductive, thin film 7. It should be noted that the adhesion layer 9 is formed beneath the PET film 8.

The above-mentioned PET film 8 is a film made of polyethylene terephthalate and formed to have a predetermined thickness (for example, approximately 10 $\mu$m to 400 $\mu$m), and is excellent in transparency, heat resistance, electric insulation, etc. Further, the above-mentioned transparent, conductive, thin film 7 is formed in such a way that, for example, an ITO film is formed on the upper surface of the above-mentioned PET film 8 by a sputtering method etc., or transparent conductivity resin is formed as a film by application etc. Furthermore, this transparent, conductive, thin film 7 is of high resistance, where its surface resistivity is set within a range from $10^5$ to $10^8$ $\Omega$/sq. Such a transparent, conductive, thin film 7 of high surface resistance can be obtained by, for example, a method of reducing a film thickness of an ITO film which has conductivity and low resistivity or a conductive polymer represented by polythiophene to increase resistivity, or a method in which a film of a conductive polymer of a low conductivity grade represented by a PEDOT-PSS solution which consists of a mixture of PEDOT (poly (3, 4-ethylenedioxithiophene)) of a conductive polymer and PSS (polystyrene sulfonic acid salt) of polyanion is formed uniformly on a film.

It should be noted that not only the structure in which the transparent, conductive, thin film 7 and the protective film 6 are stacked on the PET film 8 as described above is employed but also the structure in which a thickness of the protective film 6 is increased, the transparent, conductive, thin film 7 is formed at its undersurface, and the PET film 8 is omitted can be employed. In that case, the adhesion layer 9 is formed at the undersurface of the transparent, conductive, thin film 7.

Further, the above-mentioned protective film 6 is formed to have a predetermined thickness (several $\mu$m to tens of $\mu$m, for example), and is formed of a transparent and highly abrasive-resistant resin. Furthermore, it is an anisotropic conductive film which is conductive in a perpendicular direction of a film plane, and insulative in a surface direction of the film. In particular, the above-mentioned protective film 6 can be obtained in such a manner that a highly conductive material, for example, ORMECON (registered trademark, manufactured by Nissan Chemical Industries, Ltd., Japan), is dispersed in a commercially available hard coating, for example, Acier-PMMA (trade name, manufactured by Nidek Co. Ltd., Japan), SHIKO UV7600B (trade name, manufactured by the Nippon Synthetic Chemical Industry Co., Ltd., Japan), etc. to give a concentration of around 10%, which is applied uniformly on the above-mentioned transparent, conductive, thin film 7 using a spin coater or a bar coater, and then cured with UV light. Still further, if a conductive hard coating, such as for example, Doudencoat UV (trade name, manufactured by Chukyo Yushi Co. Ltd., Japan), "Conductive Hard Coating Ink" (trade name, manufactured by Resino Color Industry Co., Ltd., Japan), etc., is used beforehand to prepare the hard coating so as to give a predetermined resistivity, then it is possible to produce a film similar to the above. In this case, since the thus produced protective film 6 also has the function of the transparent, conductive, thin film 7, the process of forming the transparent, conductive, thin film 7 can be omitted and the thickness can be reduced, thus being advantageous in securing transparency.

Further, the adhesion layer 9 is formed of, for example, an acrylic material, a urethane material, a silicon material, or a rubber material to have a predetermined thickness (10 $\mu$m to 30 $\mu$m, for example) and has moderate adhesion, high transparency, and peelability. This adhesion layer 9 can be formed on the undersurface of the PET film 8 by bar coating, spin coating, spray coating, etc.

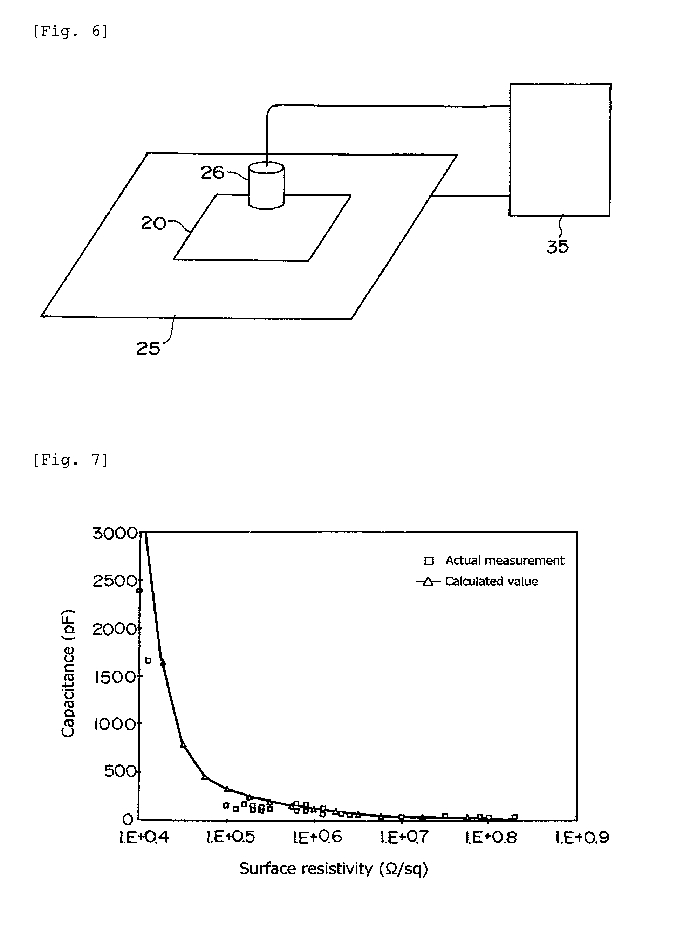

Furthermore, the surface resistivity of the above-mentioned transparent, conductive, thin film 7 is set to be within a range from $10^5$ to $10^8$ $\Omega$/sq so that a change in capacitance per unit area may be within a range from 0.36 to 6.00 pF/mm$^2$ according to thicknesses and relative dielectric constants of the cover glass 4, the PET film 8, the adhesion layer 9, etc., the change being produced when a pointing means comes into contact with the high resistance film. It should be noted that the ranges of the surface resistivity and capacitance are determined from the actual measurements under the conditions of the arrangement shown in FIG. 6, or values calculated by simulation.

The arrangement shown in FIG. 6 is such that, on an aluminum electrode 25 in the shape of a square of 100 mm x 100 mm, a high resistance film 20 in the shape of a square of 80 mm x 80 mm is provided, on which a cylindrical copper electrode 26 with a diameter of 8.4 mm (contact area is approximately 55.4 mm$^2$) is disposed. An area of the circle with a diameter of 8.4 mm is substantially equal to a contact area of the finger of the operator in contact with the touch screen.

In the actual measurements in the arrangement of FIG. 6, LCR meter 35 (ELC-131D, manufactured by Custom Corporation, Japan) as a measuring device is connected to the above-mentioned electrodes 25 and 26, and the surface resistivity of the transparent, conductive, thin film 21 in the high resistance film 20 is set to each of a plurality of conditions, to measure the capacitance produced at the high resistance film 20 at a measurement frequency of 1 kHz. As a result, the touch screen gives a response, when the pointing means having a thin nib comes into contact with the touch screen within the ranges of the above-mentioned surface resistivity and the above-mentioned capacitance.

Further, a principle will be described in which provision of the above-mentioned high resistance film 5 on the above-mentioned cover glass 4 allows the effects of apparently expanding the actual contact area when the conductive pointing means is brought into contact with the above-mentioned high resistance film 5.

For example, as shown in FIG. 2, the film 20 constituted by the transparent, conductive, thin film 21 which has a predetermined surface resistivity uniformly, a PET film 22, and an adhesion layer 23 is prepared, the electrode 25 having an area larger than that of the film 20 is arranged on the above-mentioned adhesion layer 23 side, and the nib (electrode 26) of the conductive pointing means having an area smaller than that of the above-mentioned film 20 is brought into contact with an upper surface of the above-mentioned transparent, conductive, thin film 21.

At this time, the above-mentioned film 20 sandwiched between the electrodes 25 and 26 can be represented by an equivalent circuit as shown in FIG. 3. That is to say, minute integrator circuits consisting of resistance R (R1, R2, R3, ..., Rn, Rn+1, ...) and capacitance C (C1, C2, C3, ..., Cn, Cn+1, ....) are distributed over this film 20 (where n is a positive integral value).

Here, a time constant $\tau$ of the integrator circuit is expressed with the following formula (1). The larger n of Cn (the larger the area), the greater a combined value of the resistances connected in series, to thereby increase a time constant $\tau$ of Cn.

(Formula 1)

$$\tau = R \times C \quad \ldots \quad (1)$$

If the time constant $\tau$ is too large, Cn hardly accumulates electric charges in a short time. Therefore, the capacitances from C1 to Cn-1 are considered as being in the range in which charges are accumulated.

In such an integrator circuit, as the surface resistivity R of the transparent, conductive, thin film 21 is reduced, the time constant $\tau$ decreases according to the above-mentioned formula (1). Therefore, the above-mentioned Cn in the boundary between charged and uncharged capacitances can be increased to Cn+1, Cn+2, ..., and it is possible to expand the apparent area.

It should be noted that, in general, since the following formula (2) can define the capacitance C, the above-mentioned time constant $\tau$ is also influenced by the relative dielectric constant and a thickness of the above-mentioned PET film 22.

(Formula 2)

$$C = \varepsilon_r \cdot \varepsilon_0 \times S/d \quad \ldots \quad (2)$$

where $\varepsilon_r$: relative dielectric constant,

$\varepsilon_0$: dielectric constant of vacuum,

d: thickness of dielectric (material), and

S: electrode area.

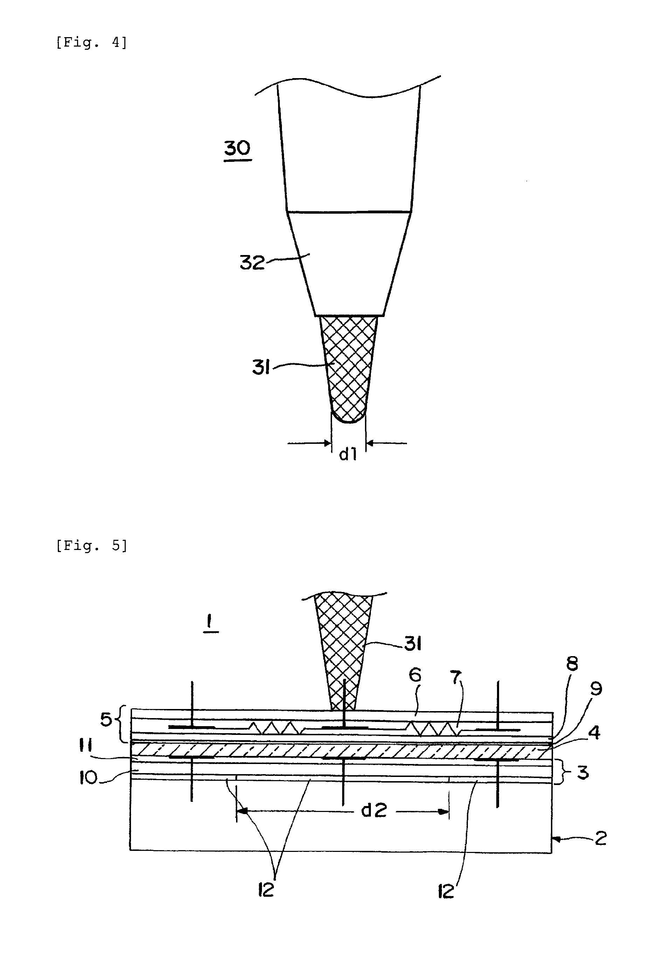

Then, a structure of the stylus pen used together with the high resistance film 5 (touch screen film) shown in FIG. 1 will be described with reference to FIG. 4. FIG. 4 is a side view showing a nib of a stylus pen 30 in accordance with the present invention.

The stylus pen 30 shown in FIG. 4 has a nib 31 made of a conductive material (for example, steel, copper, conductive rubber, conductive fiber, etc.), and a nib holder 32 for holding the nib 31. A grip part, a pen body (neither illustrated), etc. are provided aft of the nib holder 32.

The above-mentioned nib holder 32, the grip part, the pen body, etc. are made of a conductive material (for example, aluminum alloy) electrically connected with the above-mentioned nib 31 so that a human body and the nib 31 may be electrically connected. Alternatively, a conduction part (for example, metal, not shown) with which a pen user's (human body) hand (finger) surely comes into contact may be provided on a surface of the above-mentioned nib holder 32, the grip part, the penbody, etc., in a situation where it is connected with the above-mentioned nib 31 electrically.

Further, a tip width d1 of the above-mentioned nib 31 is arranged to be smaller than a length (for example, 5 mm) of the diagonal line of the electrode pad 11 or 12 of the touch screen 3.

It should be noted that the stylus pen in accordance with the present invention is not limited to the shape shown in FIG. 4. That is to say, the structure may only be such that it is formed of at least a conductive material, and it has the nib with a tip width smaller than the width of the above-mentioned electrode pad 11 or 12, and the user's hand and the above-mentioned nib are electrically connected with each other when the pen user holds and uses the stylus pen 30 by hand.

According to the thus arranged stylus pen 30 and the above-mentioned touch screen device 1, even if the width of the nib 31 of the stylus pen 30 is smaller than the size of the electrode pad 11 or 12, when the above-mentioned nib 31 comes into contact with the surface of the high resistance film 5, the contact position can be detected.

That is to say, as shown in FIG. 5, as the stylus pen 30 comes into contact with the high resistance film 5, the contact area of the stylus pen 30 of a conductor spreads apparently, which is equivalent to the case where the user's fingertip touches the touch screen, because the high resistance film 5 has the surface resistivity set to be within a range from $10^5$ to $10^8$ $\Omega$/sq.

Thus, as shown in FIG. 5, in a predetermined area including the contact position of the nib 31 of the stylus pen 30, the capacitance changes by a predetermined amount per unit area (approximately 0.36 to 6.00 pF/mm$^2$) between the transparent, conductive, thin film 7 and the electrode pad 11 (the cover glass 4, the PET film 8 which are dielectric materials).

Then, the charge generated between the transparent, conductive, thin film 7 and the electrode pad 11 moves into a human body as low current (for example, 10 $\mu$A to 20 $\mu$A) through the stylus pen 30, whereby a coordinates position in the vertical direction (position in the Y direction of FIGS. 11 and 12), for example, is detected among the contact positions of the nib 31 of the stylus pen 30.

Furthermore, as in the case of the above-mentioned transparent, conductive, thin film 7 and the case of the electrode pad 11, the capacitance changes by a predetermined amount per unit area (approximately 0.36 to 6.00 pF/mm$^2$) also between the transparent, conductive, thin film 7 and the electrode pad 12 (the cover glass 4, the PET film 8 which are dielectric materials) in the contact position of the nib 31 of the stylus pen 30.

Then, the charge generated between the transparent, conductive, thin film 7 and the electrode pad 12 moves into the human body as low current (for example, 10 $\mu$A to 20 $\mu$A) through the stylus pen 30, whereby a coordinates position in the horizontal direction (position in the X directions of FIGS. 11 and 12), for example, is detected among the contact positions of the nib 31 of the stylus pen 30.

As described above, according to the preferred embodiment in accordance with the present invention, even if the contact area of the stylus pen 30 is smaller than the area of the electrode pad 11 or 12 which constitutes the touch screen 3, the contact area can be apparently expanded, since the high resistance film 5 including the transparent, conductive, thin film 7 whose surface resistivity is set to be within the range from $10^5$ to $10^8$ $\Omega$/sq is provided on the touch screen 3 through the cover glass 4. Further, since the capacitance changes by a predetermined amount per unit area (approximately 0.36 to 6.00 pF/mm$^2$) between the transparent, conductive, thin film 7 of the high resistance film 5, and each of the electrode pads 11 and 12, it is possible to provide a contact state equivalent to that of the user's finger.

That is to say, even if the contact area of the nib 31 of the stylus pen 30 is small, the change in capacitance required for the response of the touch screen 3 can be obtained at a part 4 (cover glass) between the nib 31 in contact with the surface of the high resistance film 5 and the electrode pad 11 or 12, and the contact position of the stylus pen 30 can be detected.

Thus, it is possible to operate the touch screen device 1 by the stylus pen 30 having the thin nib 31, and improve operativity, visibility at the time of operation, and a feeling of use.

Further, since the conventional structure may be applied to the structure of the touch screen 3, it is possible to prevent the manufacturing cost from increasing.

It should be noted that in the preferred embodiments above, the touch screen 3 has the structure in which the front and back surfaces of the insulating film 10 have respectively formed thereon a plurality of electrode pads 11 and a plurality of electrode pads 12 as the sensor electrodes, however, the present invention is not limited to the structure.

For example, the electrode pad 11 and the electrode pad 12 which are made of ITO films may be respectively formed on different insulating films of the transparent thin films, and it is possible to stack them to constitute the touch screen 3. Alternatively, if the electrode pad 11 and the electrode pad 12 are insulated electrically, they may be formed on the same layer.

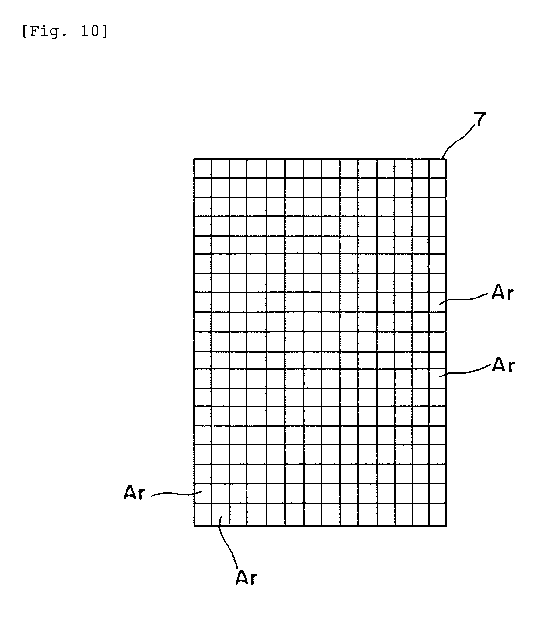

Further, in the preferred embodiment above, the transparent, conductive, thin film 7 of high resistance which constitutes the high resistance film 5 is described as being uniformly formed on the entire film. However, it may be divided into a plurality of small divisions (small electrodes Ar) mutually insulated as shown in FIG. 10.

In such an arrangement, when the nib 31 of the stylus pen 30 comes into contact with the surface of the high resistance film 5, the change in capacitance required for the response of the touch screen 3 can be generated between the above-mentioned small electrode Ar and the sensor electrode (electrode pad 11 or 12) in the contact position.

That is to say, even if a diameter (contact area) of the tip of the stylus pen 30 is small, the stylus pen 30 having the thin nib allows the touch screen to be operated, since the touch screen can be caused to provide a response in the small electrode area in the contact position.

It should be noted that although each of the small electrodes Ar shown in FIG. 10 which are vertically and horizontally divided to have a grid shape is in the shape of a square, it is not limited to the shape of a square, and it is possible to form the small electrodes Ar into another shape. Further, the small electrodes Ar may have mutually different sizes or mutually different shapes.

Further, in the preferred embodiment above, the transparent, conductive, thin film 7 is described as being made of, for example, the ITO film etc., but not limited thereto. As long as it has transparency and conductivity, it is possible to use any type of material. Further, in the preferred embodiment above, the protective film 6 provided on the transparent, conductive, thin film 7 is the anisotropic conductive film which is conductive in a perpendicular direction of a film plane, and insulative in a surface direction of the film plane.

However, in the protective film provided for the touch screen film in accordance with the present invention is not limited to the properties. For example, the protective f ilmmaybe formed of the transparent insulating film which is not anisotropic.

Furthermore, in the above-mentioned preferred embodiment, although the transparent, conductive, thin film 7 is formed on the upper surface of the PET film 8, it is not limited to the PET film 8. As long as it is the film which is excellent in transparency and electric insulation, one that is made of another material may be used instead of the PET film 8.

It should be noted that by the transparency in the transparent, conductive, thin film 7, the protective film 6, the PET film 8, and the adhesion film 9 illustrated in the preferred embodiment above, we mean a state where the contents of a displayed image can be identified through the films arranged on the touch screen.

Further, in the preferred embodiment above, the projection-type capacitive touch screen is described by way of example, but the touch screen film used together with the stylus pen in accordance with the present invention is not limited to it. It can be applied to the capacitive touch screen which detects a change in low current generated by contact of the nib, and locates the position.

Examples

The present invention will be further described with reference to Examples. It should be noted that the high resistance film used in the following Examples is arranged not to include the protective film formed on the upper surface of the transparent, conductive, thin film among the components of the touch screen film in accordance with the present invention.

[Experiment 1]

In Experiment 1, by actual measurements and simulation, it was checked whether or not it would be possible to apparently change the contact area of the pointing means by changing the surface resistivity of the transparent, conductive, thin film provided for the touch screen film (high resistance film).

(Example 1)

In Example 1, capacitance values with respect to a plurality of surface resistivities were measured and found.

A particular arrangement of the device is schematically shown in a perspective diagram of FIG. 6. It should be noted that since the arrangement shown in FIG. 6 includes a structure similar to the structure already described with reference to FIG. 2, corresponding parts are given the same reference numerals.

As shown in FIG. 6, a high resistance 80 mm x 80 mm film 20 was stacked on a 100 mm x 100 mm aluminum electrode 25 in the shape of a square, and a copper electrode 26 in the shape of pillar with a diameter of 8. 4 mm was arranged on the film 20. It should be noted that a circular area with a diameter of 8.4 mm is substantially equal to an area when the user's finger is in contact with the touch screen.

Further, the above-mentioned high resistance film 20 used was such that the transparent, conductive, thin film 21 having uniformly a predetermined surface resistivity was formed on the upper surface of the PET film 22 having a thickness of 100 $\mu$m, and the adhesion layer 23 having a thickness of 25 $\mu$m was formed on the undersurface of the PET film 22. It should be noted that the adhesion layer 23 was made of a urethane material.

Furthermore, in Example 1, a plurality of high resistance films 20 having the above-mentioned structure in which the transparent, conductive, thin film 21 had different surface resistivity were formed, each film was arranged as the high resistance film 20 in the device of FIG. 6, and the capacitance generated on the high resistance film 20 between the electrodes 25 and 26 was measured.

Still further, LCR meter 35 (ELC-131D, manufactured by Custom Corporation, Japan) was connected to the above-mentioned electrodes 25 and 26 as a measuring device. The capacitance generated on the high resistance film 20 was measured at a measurement frequency of 1 kHz.

(Example 2)

In Example 2, measurement (calculation) was carried out by simulation. In Example 2, Femtet (registered trademark, in Japan, available from Murata Software Co., Ltd.) was used to find the capacitance generated on the film as a calculated value by setting the conditions similar to those in actual measurement (Example 1).

The results of Examples 1 and 2 are shown in a graph of FIG. 7. In the graph of FIG. 7, an abscissa axis shows surface resistivity ($\Omega$/sq) and an ordinate axis shows the measurements of capacitance (pF). Further, the surface resistivity was set to be within a range from $10^4$ to $10^{8.2}$ $\Omega$/sq. Furthermore, in the graph, square ($\square$) indicates an actual measurement, and triangle ($\triangle$) indicates a calculated value by simulation.

In both Examples 1 and 2 (actual measurement, calculated value), the graph of FIG. 7 shows that the lower the surface resistivity, the larger the capacitance, within the set-up range of the surface resistivity of the film.

Further, according to Formula (2) above, if there is no change in the relative dielectric constant or the thickness of the film, then the capacitance changes in proportion to the area. Therefore, within the range of the above-mentioned surface resistivity, the surface resistivity is in inverse proportion to the area size. Thus, according to the results of Experiment 1, it is confirmed that the contact area of the pointing means can be changed apparently by changing the surface resistivity of the film.

[Experiment 2]

In general, a relative dielectric constant of a film has a frequency characteristic, and a value of capacitance changes with a frequency of current. As such, in Experiment 2, when using a stylus pen in touch screen operation, the frequency of the current flowing into a human body was measured to find a relationship between the surface resistivity and the capacitance at the frequency by simulation. Then, based on the results, the relationship between the surface resistivity and an apparent magnification of the area was examined.

In addition, iPod touch (registered trademark, manufactured by Apple Inc.) was used as a touch screen in the measurement of the current flowing into the human body when the stylus pen was used in the touch screen operation. This measurement was performed in advance and the current at a frequency of around 300 kHz was detected.

(Example 3)

In Example 3, in the case where the high resistance film provided with the transparent, conductive, thin film having a predetermined surface resistivity was stacked, a relationship between the surface resistivity and the capacitance was found by simulation at a current frequency of 300 kHz when using an electrode having a tip diameter of 2 mm as the pointing means. In addition, an arrangement (stack structure, material of each layer, thickness) of the high resistance film was in the conditions similar to those in Example 1, and Femtet (registered trademark, available from Murata Software Co., Ltd., Japan) was used as a simulator.

(Comparative Example 1)

In Comparative Example 1, in the case where the transparent, conductive, thin film is not provided (structure including the PET film and the adhesion layer only) among the components of the high resistance film used in Example 3, the capacitance at a current frequency of 300 kHz was found by simulation when using the electrode with a tip diameter of 2 mm as the pointing means.

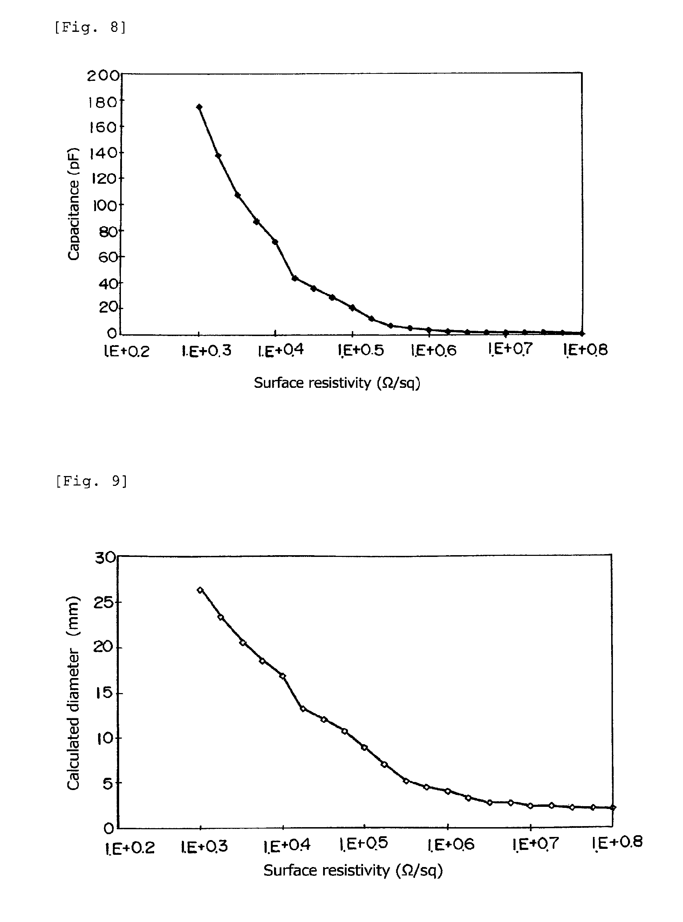

The results of Example 3 are shown in a graph of FIG. 8. In the graph of FIG. 8, an abscissa axis shows surface resistivity ($\Omega$/sq) and an ordinate axis shows capacitance (pF). The surface resistivity was changed and set up within a range from $10^3$ to $10^8$ $\Omega$/sq.

Further, the capacitance generated between the electrodes was 0.94 pF as a result of the simulation of Comparative Example 1.

As shown in the graph of FIG. 8, the capacitance at the time of $10^6$ $\Omega$/sq, for example, was about 4 pF. It was confirmed that the capacitance generated was approximately 4 times the capacitance in the case where the transparent, conductive, thin film was not provided (0.94 pF).

Further, magnification of the capacitance for each surface resistivity was determined from the graph of FIG. 8. By providing the highly-resistant, transparent, conductive, thin film, a diameter is calculated from the magnification when the electrode with a tip diameter of 2 mm apparently expands, thus giving a graph in FIG. 9.

In the graph of FIG. 9, an abscissa axis shows the surface resistivity ($\Omega$/sq), and an ordinate axis shows the calculated (converted) diameter (mm) by apparently expanding the diameter of the electrode 26.

As shown in the graph of FIG. 9, it is confirmed that when the surface resistivity is within the range from $10^3$ to $10^8$ $\Omega$/sq, the lower the surface resistivity, the larger the apparent diameter of the electrode i.e. the apparent area.

[Experiment 3]

In Experiment 3, as Comparative Example, as for an actual device having a touch screen, the range of the diameter of a pin gauge tip to which the touch screen might respond was examined either in the case where a film was not stacked on the front of the touch screen or in the case where a conventionally marketed protective film was stacked on the front of the touch screen.

It should be noted that a steel pin gauge was used as the conductive pointing means, and the measurement was carried out in a situation where an aluminum board was arranged under the main body of the actual device and the aluminum board and the pin gauge were connected with copper wire in order to avoid the individual difference of a human body.

(Comparative Example 2)

In Comparative Example 2, using a 3rd generation iPad (registered trademark) as the touch screen, when not attaching a film to the front of the touch screen, the range of the diameter of the pin gauge tip to which the touch screen was able to respond was examined.

The results of Comparative Example 2 are shown in Table 1. It should be noted that, in Table 1, $\bigcirc$ (circle) indicates that the touch screen provides a response, X (cross) shows that it does not give a response, and $\triangle$ (triangle) indicates that it provides responses in some places on the screen.

[Table 1]

| Model | 3rd generation iPad without film, manufactured by Apple Inc. | | | | | | | | | |
|---|---|---|---|---|---|---|---|---|---|---|
| Diameter (mm) of pin gauge tip | 3.7 | 3.8 | 3.85 | 3.87 | 3.89 | 3.9 | 3.95 | 3.97 | 4.0 | 4.1 |
| Resulting response | X | $\triangle$ | $\triangle$ | $\triangle$ | $\triangle$ | $\triangle$ | $\triangle$ | $\triangle$ | $\bigcirc$ | $\bigcirc$ |

(Comparative Example 3)

In Comparative Example 3, using a 3rd generation iPad (registered trademark) as the touch screen, when attaching a conventionally marketed protective film (surface resistivity of $10^{13}$ $\Omega$/sq) to the front of the touch screen, the range of the diameter of the pin gauge tip to which the touch screen was able to respond was examined.

The results of Comparative Example 3 are shown in Table 2. It should be noted that, in Table 2, $\bigcirc$ (circle) indicates that the touch screen provides a response, X (cross) shows that it does not give a response, and $\triangle$ (triangle) indicates that it provides responses in some places on the screen.

[Table 2]

| Model | 3rd generation iPad (manufactured by Apple Inc.) to which conventional protective film is attached | | | |
|---|---|---|---|---|
| Diameter (mm) of pin gauge tip | 4.5 | 4.6 | 4.7 | 4.8 |
| Resulting response | X | X | $\triangle$ | $\bigcirc$ |

(Comparative Example 4)

In Comparative Example 4, using a 4th generation iPod touch (registered trademark) as the touch screen, when not attaching a film to the front of the touch screen, the range of the diameter of the pin gauge tip to which the touch screen was able to respond was examined.

The results of Comparative Example 4 are shown in Table 3. It should be noted that, in Table 3, ○ (circle) indicates that the touch screen provides a response, X (cross) shows that it does not give a response, and Δ (triangle) indicates that it provides responses in some places on the screen.

[Table 3]

| Model | 4th generation iPod touch without film, manufactured by Apple Inc. | | | | | | | | | |
|---|---|---|---|---|---|---|---|---|---|---|
| Diameter (mm) of pin gauge tip | 3.7 | 3.8 | 3.85 | 3.87 | 3.89 | 3.9 | 3.95 | 3.97 | 4.0 | 4.1 |
| Resulting response | X | Δ | Δ | Δ | Δ | ○ | ○ | ○ | ○ | ○ |

(Comparative Example 5)

In Comparative Example 5, using a 4th generation iPod touch (registered trademark) as the touch screen, when attaching a conventionally marketed protective film (surface resistivity of $10^{13}$ Ω/sq) to the front of the touch screen, the range of the diameter of the pin gauge tip to which the touch screen was able to respond was examined.

The results of Comparative Example 5 are shown in Table 4. It should be noted that, in Table 4, ○ (circle) indicates that the touch screen provides a response, X (cross) shows that it does not give a response, and Δ (triangle) indicates that it provides responses in some places on the screen.

[Table 4]

| Model | 4th generation iPod touch (manufactured by Apple Inc.) to which conventional protective film is attached | | | |
|---|---|---|---|---|
| Diameter (mm) of pin gauge tip | 4.3 | 4.35 | 4.36 | 4.4 |
| Resulting response | X | X | Δ | ○ |

From Table 1 (Comparative Example 2), it is confirmed that when the 3rd generation iPad is used as the touch screen, the touch screen having no film gives a response, if the diameter of the pin gauge is 4.0 mm or more. On the other hand, from Table 2 (Comparative Example 3), it is confirmed that when the conventional protective film is provided, the area required for the response becomes large, and the touch screen gives a response, if the diameter of the pin gauge is 4.8 mm or more.

Further, from Table 3 (Comparative Example 4), it is confirmed that when the 4th generation iPod touch is used as the touch screen, the touch screen having no film gives a response, if the diameter of the pin gauge is 3.9 mm or more. On the other hand, from Table 4 (Comparative Example 5), it is confirmed that the touch screen having the conventional protective film causes the area required for the response to be large, and the touch screen gives a response, if the diameter of the pin gauge is 4.4 mm or more.

[Experiment 4]

As a result of the above-mentioned Experiment 3, and from Tables 1 and 3 where a film is not attached and the diameter of the pin gauge tip is 3.7 mm, the touch screen does not give a response at all. Therefore, if the touch screen provides a response in the case where the film (high resistance film) for touch screen in accordance with the present invention is attached to the touch screen and the diameter of the pin gauge tip is 3.7 mm (contact area is 10.8 $mm^2$) or less, then the effects of the present invention can be confirmed.

Thus, in Experiment 4, the high resistance film having a predetermined surface resistivity as an example was attached, at the front, to each of the 3rd generation iPad used as the touch screen in Experiment 3 and the 4th generation iPod touch, and the response was examined in the case where the diameter of a steel pin gauge tip was 3.7 mm.

(Example 4)

In Example 4, using a 3rd generation iPad (registered trademark) as the touch screen, the high resistance film was attached to the front of the touch screen, and the range of the surface resistivity at which the touch screen was able to respond was examined.

As described above, the pin gauge with a tip diameter of 3.7 mm was used as the pointing means, and the touch screen used was such that the transparent, conductive, thin film having a predetermined surface resistivity as the above-mentioned high resistance film was formed on the upper surface side of the PET film having a thickness of 100 $\mu$m, and the adhesion layer having a thickness of 25 $\mu$m was formed on the undersurface side of the above-mentioned PET film. It should be noted that the above-mentioned adhesion layer was made of a urethane material.

Further, when examining the range of the surface resistivity in the above-mentioned high resistance film, a surface resistance meter ST-4 manufacture by SIMCO Japan was used for measurement of surface resistivity.

The results of Example 4 are shown in Table 5. It should be noted that, in Table 5, ○ (circle) indicates that the touch screen gives a response, X (cross) shows that it does not provide a response, and Δ (triangle) indicates that it gives responses in some places on the screen.

[Table 5]

| Resulting response in the case of 3rd generation iPad (registered trademark) to which high resistance film is attached | | | | | | | |
|---|---|---|---|---|---|---|---|
| Surface resistivity ($\Omega$/sq) | $10^{4.5}$ | $10^{5.0}$ | $10^{5.4}$ | $10^{6.0}$ | $10^{6.5}$ | $10^{7.1}$ | $10^{7.6}$ | $10^{7.8}$ |
| Resulting response | X | ○ | ○ | ○ | ○ | ○ | ○ | ○ |
| Surface resistivity ($\Omega$/sq) | $10^{7.9}$ | $10^{8.0}$ | $10^{8.1}$ | $10^{8.2}$ | $10^{8.3}$ | | |
| Resulting response | ○ | ○ | Δ | Δ | Δ | | |

(Example 5)

In Example 5, a 4th generation iPod touch was used as the touch screen. Other conditions were the same as those in Example 4.

The results of Example 5 are shown in Table 6. It should be noted that, in Table 6, ○ (circle) indicates that the touch screen gives a response, X (cross) shows that it does not provide a response, and Δ (triangle) indicates that it gives responses in some places on the screen.

[Table 6]

| Resulting response in the case of 4th generation iPod touch (registered trademark) to which high resistance film is attached | | | | | | | |
|---|---|---|---|---|---|---|---|
| Surface resistivity ($\Omega$/sq) | $10^{4.5}$ | $10^{5.0}$ | $10^{5.4}$ | $10^{6.0}$ | $10^{6.5}$ | $10^{7.1}$ | $10^{7.6}$ | $10^{7.8}$ |
| Resulting response | X | ○ | ○ | ○ | ○ | ○ | ○ | ○ |
| Surface resistivity ($\Omega$/sq) | $10^{7.9}$ | $10^{8.0}$ | $10^{8.1}$ | $10^{8.2}$ | $10^{8.3}$ | | |
| Resulting response | ○ | ○ | ○ | Δ | Δ | | |

It can be seen from Tables 5 and 6 that since both the models give a response when the surface resistivity is within the range of from $10^{5.1}$ to $10^{8.0}$ $\Omega$/sq, the contact area of the pin gauge with a diameter of 3.7 mm is apparently expanded in the range, thus causing the touch screen to provide a response.

[Experiment 5]

As can be seen from Formula (2) shown in the above-mentioned preferred embodiment, the capacitance C changes also with relative dielectric constant $\varepsilon_r$ or a thickness d of the dielectric material. Therefore, when the structure of the touch screen film (high resistance film) in accordance with the present invention is specified by the surface resistivity, it is desirable that the range of the capacitance per unit area to which the touch screen can respond is simultaneously specified within the range of the surface resistivity.

Then, in Experiment 5, the high resistance film was stacked on the touch screen, and the ranges of the surface resistivity and the capacitance in which the touch screen was able to give a response were examined when the steel pin gauge having a tip diameter of 3.7 mm was used.

(Example 6)

In Example 6, using the 3rd generation iPad as the touch screen, the high resistance film was attached to the front of the touch screen, and the ranges of the surface resistivity and the capacitance in which the touch screen gave a response were examined.

As described above, the touch screen used was such that the steel pin gauge with a tip diameter of 3.7 mm was used as the pointing means, the transparent, conductive, thin film having a predetermined surface resistivity as the above-mentioned high resistance film was formed on the upper surface side of the PET film having a thickness of 100 $\mu$m, and the adhesion layer made of a urethane material and having a thickness of 25 $\mu$m was formed on the undersurface side of the above-mentioned PET film.

The results of Example 6 are shown in Table 7. It should be noted that, in Table 7, $\bigcirc$ (circle) indicates that the touch screen gives a response, X (cross) shows that it does not provide a response, and $\Delta$ (triangle) indicates that it provides responses in some places on the screen.

[Table 7]

| Capacitance (pF/mm$^2$) | Surface resistivity ($\Omega$/sq) | | | | | |
|---|---|---|---|---|---|---|
| | $10^{4.9}$ | $10^{5.0}$ | $10^{6.0}$ | $10^{7.0}$ | $10^{8.0}$ | $10^{8.1}$ |
| 0.35 | X | $\Delta$ | $\Delta$ | $\Delta$ | $\Delta$ | X |
| 0.36 | $\Delta$ | $\bigcirc$ | $\bigcirc$ | $\bigcirc$ | $\bigcirc$ | $\Delta$ |
| 1.00 | $\Delta$ | $\bigcirc$ | $\bigcirc$ | $\bigcirc$ | $\bigcirc$ | $\Delta$ |
| 2.00 | $\Delta$ | $\bigcirc$ | $\bigcirc$ | $\bigcirc$ | $\bigcirc$ | $\Delta$ |
| 6.00 | $\Delta$ | $\bigcirc$ | $\bigcirc$ | $\bigcirc$ | $\bigcirc$ | $\Delta$ |
| 6.10 | X | $\Delta$ | $\Delta$ | $\Delta$ | $\Delta$ | X |

From Table 7, it is confirmed that the touch screen can be caused to give a response at a capacitance per unit area of from 0.36 to 6.00 pF/mm$^2$ and at a surface resistivity of from $10^{5.0}$ to $10^{8.0}$ $\Omega$/sq, when the tip diameter of the pointing means is 3.7 mm (approximately 10.8 mm$^2$) .

[Experiment 6]

As described above, according to Experiments 4 and 5, it was confirmed that the touch screen was capable of being caused to give a response, even when the tip diameter of the pointing means was as thin as 3.7 mm. Then, in Experiment 6, the pointing means was examined to see what would be the minimum diameter to which the touch screen would respond when using the film having a predetermined high surface resistivity.

(Example 7)

In Example 7, using the 3rd generation iPad as the touch screen, the high resistance film was attached to the front of the touch screen, and the touch screen was examined to see whether it would provide a response by varying the tip diameter of the pointing means.

A plurality of steel pin gauges having different tip diameters were used as the pointing means.

The touch screen used was such that the transparent, conductive, thin film having a surface resistivity of $10^{5.0}$ $\Omega$/sq as the above-mentioned high resistance film was formed on the upper surface side of the PET film having a thickness of 100 $\mu$m, and the adhesion layer made of a urethane material and having a thickness of 25 $\mu$m was formed on the undersurface side of the above-mentioned PET film.

The results of Example 7 are shown in Table 8. It should be noted that, in Table 8, $\bigcirc$ (circle) indicates that the touch screen gives a response, X (cross) shows that it does not provide a response, and Δ (triangle) indicates that it gives responses in some places on the screen.

[Table 8]

| Tip diameter of pin gauge | | | | |
|---|---|---|---|---|
| 1.59 | 1.6 | 1.61 | 1.62 | 1.7 |
| X | Δ | Δ | ○ | ○ |

From Table 8, it is confirmed that in the case where the surface resistivity of the film is $10^{5.0}$ Ω/sq, the touch screen can be caused to give a response, when the contact area where the pointing means is in contact with the top of the touch screen is 2.1 $mm^2$ (diameter of 1.62 mm) or more.

In addition, the thicknesses of the PET film and the adhesion layer, and the material of the adhesion layer, etc., as in the conditions of above Examples, were varied within the predetermined range and the similar experiments were carried out, so that the results similar to those in above Examples were obtained.

From the results of above Examples, it is confirmed that as the touch screen film (high resistance film) in accordance with the present invention is attached to the touch screen, even the pointing means having the thin tip diameter like the stylus pen in accordance with the present invention can be operated.

Explanation of Reference Numerals

    1: touch screen device
    2: LCD unit
    3: touch screen
    4: cover glass
    5: high resistance film (touch screen film)
    6: protective film
    7: transparent conductive thin film
    8: PET film
    9: adhesive layer
    10: insulating film
    11: electrode pad (sensor electrode)
    12: electrode pad (sensor electrode)
    30: stylus pen
    31: nib
    32: nib holder (conduction part)

**Claims**

1. A film for a capacitive touch screen, the filmbeing interposed between the capacitive touch screen in which sensor electrodes are arranged in the shape of a grid, and a conductive pointing means, **characterized in that**
   at least a transparent, conductive, thin film is provided which has a predetermined surface resistivity set to be within a range from $10^{5.0}$ to $10^{8.0}$ Ω/sq, and
   on contact with said pointing means, a change in capacitance per unit area of 0.36 to 6.00 (pF/$mm^2$) occurs in a dielectric material between a predetermined area including the contact position and said sensor electrode.

2. A touch screen film as claimed in claim 1, **characterized in that** said transparent, conductive, thin film comprises a plurality of transparent small electrodes which are electrically and mutually insulated.

3. A touch screen film as claimed in claim 1 or 2, **characterized by** comprising a transparent protective film provided on said transparent, conductive, thin film.

4. A capacitive touch screen using the touch screen film as claimed in any one of claims 1 to 3, **characterized by** comprising said touch screen film and the sensor electrodes which are provided for a lower layer than said touch screen film, and are arranged in the shape of a grid.

5. A stylus pen which is used for operating a capacitive touch screen where the sensor electrodes are arranged in the shape of a grid, and is used together with the touch screen film as claimed in any one of claims 1 to 4, **characterized in that** a tip formed of a conductive material is provided, and said tip and a human body are electrically connected.

6. A stylus pen as claimed in claim 5, **characterized in that** a contact area between said tip and said touch screen film is within a range from 2.1 mm$^2$ to 10.8 mm$^2$.

[Fig. 1]

[Fig. 2]

[Fig. 3]

[Fig. 4]

[Fig. 5]

[Fig. 6]

[Fig. 7]

[Fig. 8]

[Fig. 9]

[Fig. 10]

[Fig. 11]

[Fig. 12]

EP 2 843 514 A1

## INTERNATIONAL SEARCH REPORT

International application No.

PCT/JP2013/061354

### A. CLASSIFICATION OF SUBJECT MATTER
*G06F3/03*(2006.01)i, *G06F3/041*(2006.01)i, *G06F3/044*(2006.01)i

According to International Patent Classification (IPC) or to both national classification and IPC

### B. FIELDS SEARCHED

Minimum documentation searched (classification system followed by classification symbols)
G06F3/03, G06F3/041, G06F3/044

Documentation searched other than minimum documentation to the extent that such documents are included in the fields searched
Jitsuyo Shinan Koho          1922-1996   Jitsuyo Shinan Toroku Koho    1996-2013
Kokai Jitsuyo Shinan Koho    1971-2013   Toroku Jitsuyo Shinan Koho    1994-2013

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X<br>A | JP 2012-068893 A  (Hitachi Displays, Ltd.),<br>05 April 2012 (05.04.2012),<br>paragraphs [0005] to [0006], [0009] to [0010],<br>[0021] to [0024], [0034] to [0036]; fig. 1 to<br>5, 23 to 25, 45 to 47 | 1,3-6<br>2 |
| A | JP 2009-205379 A  (Seiko Instruments Inc.),<br>10 September 2009 (10.09.2009),<br>paragraph [0036]<br>(Family: none) | 1-6 |
| A | JP 2012-084144 A  (THALES SA),<br>26 April 2012 (26.04.2012),<br>paragraph [0040] | 1-6 |

☒ Further documents are listed in the continuation of Box C.　　☒ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| 07 June, 2013 (07.06.13) | 18 June, 2013 (18.06.13) |

| Name and mailing address of the ISA/<br>Japanese Patent Office | Authorized officer |
|---|---|
| Facsimile No. | Telephone No. |

Form PCT/ISA/210 (second sheet) (July 2009)

**INTERNATIONAL SEARCH REPORT**

International application No.

PCT/JP2013/061354

C (Continuation).  DOCUMENTS CONSIDERED TO BE RELEVANT

| Category* | Citation of document, with indication, where appropriate, of the relevant passages | Relevant to claim No. |
|---|---|---|
| A | JP 2010-067117 A  (Mitsubishi Electric Corp.), 25 March 2010 (25.03.2010), paragraphs [0009], [0035], [0040] | 1-6 |
| A | Gary BARRETT, Ryomei OMOTE, Projected-Capacitive Touch Technology, Information Display, 2010.03.31, Volume 26, Issue 3, pages 16-21 | 1-6 |
| A | Osamu KUROSAWA, Nobuhiro MATSUZOE, Kazumichi SAKAMOTO, Seiden Yoryo Hoshiki Touch Panel no Gijutsu Yoso to Shingijutsu no Doko / Seiden Yoryo Hoshiki Touch Panel-yo IC no Tokucho to Kairo Sekkei Gijutsu / Full Multi Touch Kino o Jitsugen suru Furukute Atarashii Concept no IC, Touch Panel Saizensen, first edition, Nikkei Business Publications, Inc., 10 September 2010 (10.09.2010), pages 44 to 73 | 1-6 |

Form PCT/ISA/210 (continuation of second sheet) (July 2009)

INTERNATIONAL SEARCH REPORT

Information on patent family members

International application No.

PCT/JP2013/061354

| | | | |
|---|---|---|---|
| JP 2012-068893 A | 2012.04.05 | EP 2434379 A2 | 2012.03.28 |
| | | US 2012/0075243 A1 | 2012.03.29 |
| | | KR 2012031468 A | 2012.04.03 |
| | | CN 102419487 A | 2012.04.18 |
| | | TW 201220170 A | 2012.05.16 |
| JP 2009-205379 A | 2009.09.10 | (Family: none) | |
| JP 2012-084144 A | 2012.04.26 | CA 2754317 A1 | 2012.04.06 |
| | | US 2012/0086667 A1 | 2012.04.12 |
| | | FR 2965944 A1 | 2012.04.13 |
| | | CN 102591515 A | 2012.07.18 |
| | | FR 2965944 B1 | 2013.02.15 |
| JP 2010-067117 A | 2010.03.25 | US 2010/0066693 A1 | 2010.03.18 |
| | | US 8094133 B2 | 2012.01.10 |

Form PCT/ISA/210 (patent family annex) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008310551 A